# EUROPÄISCHE PATENTSCHRIFT

(11) **EP 2 369 309 B1**
(45) Veröffentlichungstag und Bekanntmachung des Hinweises auf die Patenterteilung: **10.09.2014**
(21) Anmeldenummer: 11157857.1
(22) Anmeldetag: 11.03.2011
(51) Int. Cl.: G01F 23/296

(54) **Vorrichtung zur Bestimmung eines Füllstandes**
Device for determining a fill level
Dispositif de détermination d'un niveau de remplissage

(30) Priorität: 16.03.2010 DE 102010011492
(43) Veröffentlichungstag der Anmeldung: 28.09.2011
(73) Patentinhaber: Hella KGaA Hueck & Co., 59552 Lippstadt (DE)
(72) Erfinder: Niemann, Thomas, 27743 Delmenhorst (DE)
(74) Vertreter: Siekmann, Gunnar

(56) Entgegenhaltungen:
- EP-A1- 2 133 670
- WO-A1-2008/009277
- US-A1- 2006 201 578

## Beschreibung

Die Erfindung betrifft eine Vorrichtung zur Bestimmung eines Füllstandes in einem Behälter, mit einem Dämpfungsbecher, der eine Eintrittsöffnung und eine Entlüftungsöffnung aufweist, mit einem im Dämpfungsbecher angeordneten Ultraschallwandler sowie mindestens einer Vorkammer, wobei die Vorkammer eine Einlassöffnung zum Behälter und eine Auslassöffnung zur Eintrittsöffnung des Dämpfungsbechers aufweist.

Um den Ölstand in Motoren zu ermitteln, werden überwiegend Ultraschallsensoren eingesetzt. Diese senden Schallwellen aus, die an der Grenzfläche zwischen zwei Medien, z. B. Gas und Öl, wobei statt Öl auch andere Flüssigkeiten gemessen werden können, reflektiert und vom Ultraschallsensor wieder empfangen werden. Aus der erfassten Laufzeit der Schallwellen kann dann der Füllstand in dem Behälter, der die Vorrichtung aufweist, ermittelt werden. Bei einem im Betrieb befindlichen Motor, insbesondere in einem Kraftfahrzeug, ist der Füllstand des Öls jedoch nur schwer bis gar nicht zu ermitteln, da das Öl stark verschäumt ist und die Schallwellen an den Gasbläschen im Öl reflektiert werden. Die detektierten Werte streuen daher sehr stark und zeigen einen zu niedrigen Ölstand an.

Für auswertbare Messungen ist allerdings eine eindeutige Grenzfläche zwischen den Medien Gas und Öl nötig. Um dem Problem der stark streuenden Werte entgegenzuwirken, sind den Ultraschallsensoren Dämpfungseinrichtungen, z. B. sogenannte Dämpfungsbecher, zugeordnet.

Innerhalb dieser Dämpfungsbecher, welche die Messstrecke des Ultraschallsensors umhüllen, ist die zu messende Flüssigkeit beruhigt und nur durch eine kleine Öffnung des Dämpfungsbechers zum Behälter mit diesem verbunden. Durch die kleine Öffnung des Dämpfungsbechers zum Behälter gelangen weniger Gasblasen in den Dämpfungsbecher. Der Füllstand im Dämpfungsbecher entspricht dabei dem Flüssigkeitsstand außerhalb des Dämpfungsbechers.

Weiterentwicklungen eines solchen Dämpfungsbechers zeigen die Druckschriften EP 2 133 670 A1, DE 10 2008 027 969 A1 und WO 2008/009277 A1. In beiden Druckschriften ist dem Dämpfungsbecher ein Vorvolumen zugeordnet. Diese Vorvolumen dienen dazu, die zu messende Flüssigkeit, z. B. verschäumtes Öl, zu entgasen, so dass in der Messstrecke des Dämpfungsbechers eine Flüssigkeit einströmt, die relativ blasenfrei ist.

Die US 2006/0201578 A1 zeigt eine Füllstandsmessvorrichtung für Kraftstoffe. Mit einem dünnwandigen Umhüllungselement ist ein Vorvolumen geschaffen.

Jedoch zeigen Tests, dass das verschäumte Öl in einem Motor bei plötzlichen Drehzahlsprüngen z. B. von 3000 auf 4000 oder 5000 Umdrehungen / Minute die bekannten Vorvolumen und Kammern sehr schnell durchströmt, ohne dass die Möglichkeit besteht, dass das verschäumte Öl in dem Vorvolumen entgasen kann. Es kommt somit dazu, dass Gasbläschen in die Messstrecke des Dämpfungsbechers eingetragen werden und die korrekte Anzeige des Füllstandes behindern. Da diese Gasbläschen nur langsam aus der Messstrecke des Dämpfungsbechers entweichen können, detektieren die bekannten Sensoren auch lange Zeit nach den Drehzahlsprüngen nicht den tatsächlichen Füllstand im Behälter, obwohl außerhalb des Dämpfungsbechers ein messbarer Füllstand vorliegt.

Die Zeit, in der der Füllstand nicht korrekt erfasst wird, wird als Totzeit bezeichnet und führt eventuell zur Fehlermeldung eines zu niedrigen Füllstandes im Behälter. Dieses Problem tritt besonders bei einer dynamischen Fahrweise über einen längeren Zeitraum auf, da hier aufgrund der langen Totzeiten, in denen nicht der tatsächliche Füllstand ermittelt wird, keine Mittelwertberechnung mehr möglich ist, was in der Folge durch "falsches Handeln" aufgrund der unwahren Fehlermeldung zu größeren Schäden führen kann.

Der Erfindung liegt die Aufgabe zu Grunde, eine Vorrichtung der eingangs genannten Art zu schaffen, bei der auch bei dynamischer Fahrweise mit Drehzahlsprüngen eine stabile Detektion des Füllstandes im Behälter ohne längere Totzeiten möglich ist.

Die Lösung dieser Aufgabe erfolgt mit einer Vorrichtung mit den Merkmalen des Patentanspruchs 1. Vorteilhafte Weiterbildungen der Erfindung sind in den Unteransprüchen beschrieben.

Eine Vorrichtung zur Bestimmung eines Füllstandes in einem Behälter, mit einem Dämpfungsbecher, der eine Eintrittsöffnung und eine Entlüftungsöffnung aufweist, mit einem im Dämpfungsbecher angeordneten Ultraschallwandler sowie mindestens einer Vorkammer, wobei die Vorkammer eine Einlassöffnung zum Behälter und eine Auslassöffnung zur Eintrittsöffnung des Dämpfungsbechers aufweist, zeichnet sich erfindungsgemäß dadurch aus, dass die Vorkammer der Vorrichtung eine zweite Auslassöffnung aufweist, dass die zweite Auslassöffnung in einer Ableitungseinrichtung mündet und dass die Ableitungseinrichtung im oberen Endbereich der Messstrecke des Dämpfungsbechers endet. Bei hohen Drehzahlen und bei plötzlichen Drehzahländerungen strömt stark verschäumte Flüssigkeit in die Vorkammer der Vorrichtung und kann über die zweite Auslassöffnung in die Ableitungseinrichtung geführt werden. Dass die einströmende, verschäumte Flüssigkeit in die Ableitungseinrichtung und nicht weiter in die Vorkammer gedrückt wird, ist durch die größere Trägheit der Flüssigkeit in der Vorkammer bedingt. In die Vorkammer gelangt nur ein kleiner Teilstrom der verschäumten Flüssigkeit und wird dort derart verlangsamt, dass die enthaltenen Gasbläschen entgasen können und in der Messstrecke des Dämpfungsbechers auch bei plötzlichen Drehzahländerungen ein stabiler, detektierbarer Füllstand vorliegt, der dem Füllstand im Behälter entspricht.

Dabei ist entscheidend, dass der Teilstrom, der in die Vorkammer gelangt, nur ein kleiner Teil des gesamten in die Vorrichtung hineinströmenden Volumens ist. Bei größeren, plötzlich einschießenden Volumenströmen würden Gasblasen in die Messstrecke gelangen. Die ermittelten Werte wären dann über einen längeren Zeitraum beeinträchtigt.

Der Großteil des Volumens in der Ableitungseinrichtung strömt, nachdem sich die Flüssigkeit in dem Behälter beruhigt hat, über die Einlassöffnung der Vorkammer wieder in den Behälter zurück, ohne dass Gasblasen in die Vorkammer bzw. die Messstrecke der Vorrichtung gelangen. Bei moderaten Änderungen des Füllstandes und niedrigeren Drehzahlen wirkt die Vorkammer zum Auflösen der Gasblasen und in der Messstrecke des Ultraschallsensors im Dämpfungsbecher kann eine blasenfreie Messung erfolgen. Als Ableitungseinrichtung ist ein Bypass vorgesehen.

Damit der trotz zweiter Auslassöffnung und Ableitungseinrichtung in die Vorkammer eindringende Teilstrom effektiv verlangsamt wird, ist vorgesehen, dass die zweite Auslassöffnung der Vorkammer in Strömungsrichtung direkt hinter der Einlassöffnung der Vorkammer zum Behälter und vor den Windungen der Vorkammer angeordnet ist. Durch diese Anordnung ist ein Höchstmaß an Sicherheit gegeben. Die Strecke zwischen der zweiten Auslassöffnung zur Ableitungseinrichtung und der Eintrittsöffnung in den Dämpfungsbecher ist somit möglichst lang. Jede andere Anordnung der zweiten Auslassöffnung würde die Strecke, die das nicht in die Ableitungseinrichtung umgeleitete, verschäumte Öl in der Vorkammer zurücklegen muss, verkürzen und somit die Möglichkeit des Gasblaseneintrags in die Messstrecke des Dämpfungsbechers erhöhen.

Weiterhin ist vorgesehen, die Auslassöffnung mit der Ableitungseinrichtung im oberen Bereich der Vorkammer anzuordnen. Damit ist erreicht, dass insbesondere die schnell in die Vorkammer hineinströmende, stark mit Luftblasen durchsetzte Flüssigkeit nicht in die Vorkammer gelangt, sondern auf einfache Weise nach oben abgelenkt wird. Dies wird dadurch begünstigt, dass die verschäumte Flüssigkeit eine geringere Dichte als die nicht bzw. weniger verschäumte Flüssigkeit in der Vorkammer aufweist. Zudem sind die Gasblasen in der Flüssigkeit bestrebt nach oben zu entweichen. Ist die Ableitungseinrichtung von der Vorkammer beispielsweise nach unten gerichtet, würden die mit der verschäumten Flüssigkeit abgeführten Gasbläschen nach oben aufsteigen und wiederum in die Vorkammer gelangen. Daher ist die Ableitungseinrichtung bevorzugt nach oben, z. B. senkrecht zur Horizontalen, ausgerichtet und weist bevorzugt im oberen Endbereich zudem eine Entlüftungsöffnung auf.

Der nach oben ausgerichtete, Bypass ist parallel zu der Messstrecke des Ultraschallwandlers im Dämpfungsbecher angeordnet. Damit ist erreicht, dass sowohl die Messstrecke als auch die Ableitungseinrichtung bei Schwingungen des Dämpfungsbechers die gleiche mechanische Auslenkung erfahren. Dies ist wichtig, da durch die Schwingung des Dämpfungsbechers bei bestimmten Drehzahlen bzw. in bestimmten Drehzahlbereichen ein Sog im Innern des Dämpfungsbechers entstehen kann. Die einströmende, verschäumte Flüssigkeit gelangt dann leichter in die Vorrichtung und könnte durch die Vorkammer in die Messstrecke strömen ohne zu entgasen. Aufgrund des gleichen Sogs in der Ableitungseinrichtung und dem in der Vorkammer entgegengesetzten Widerstand wird die Flüssigkeit jetzt trotz des Soges in der Messstrecke in die Ableitungseinrichtung abgelenkt. Da die Messstrecke des Ultraschallwandlers so ausgerichtet ist, dass von dem am Boden des Dämpfungsbechers angeordneten Ultraschallsensor die Schallwellen senkrecht nach oben ausgesendet werden, werden der Ölschaum oder die Flüssigkeit in der Ableitungseinrichtung nach oben abgeführt. Nach einer Weiterbildung ist zudem vorgesehen, dass die Ableitungseinrichtung außen an den Dämpfungsbecher anliegend geführt ist. In Kombination mit der parallelen Ausrichtung zur Messstrecke des Ultraschallwandlers im Dämpfungsbecher ist so eine einfache und platzsparende Bauweise der Ableitungseinrichtung verwirklicht.

Erfindungsgemäß endet die Ableitungseinrichtung im oberen Endbereich der Messstrecke des Dämpfungsbechers. Bevorzugt schließt die Ableitungseinrichtung am oberen Ende genau neben der Messstrecke ab.

Damit ist der bei Anregung des Dämpfungsbechers, möglicherweise entstehende Sog in der Messstrecke und der Ableitungseinrichtung annähernd gleich. Zudem soll vermieden werden, dass über die obere Öffnung der Ableitungseinrichtung Flüssigkeiten, wie verschäumtes Öl, in die Ableitungseinrichtung hineinlaufen. Um das Hineinlaufen von verschäumtem Öl über die obere Entlüftungsöffnung der Ableitungseinrichtung zusätzlich zu erschweren ist vorgesehen, dass der Ableitungseinrichtung im oberen Endbereich ein Abschirmelement zugeordnet ist. Dieses ist bevorzugt so konstruiert, dass Luft aus der Ableitungseinrichtung entweichen kann, ein Eintreten von Flüssigkeit oder Ölschaum jedoch nicht möglich ist. Bei einer möglichen Ausführung sind die Entlüftungsöffnungen der Ableitungseinrichtung und des Abschirmelements versetzt zueinander angeordnet. In einer Ausführungsform kann das Abschirmelement die Ableitungseinrichtung und die Messstrecke des Dämpfungsbechers, somit also die gesamte Vorrichtung, überspannen, so dass der erfindungsgemäße Ultraschallsensor statt einzelner Abschirmelemente für die oberen Entlüftungsöffnungen ein gemeinsames Abschirmelement aufweist.

Nach einer anderen Weiterbildung ist zudem vorgesehen, dass die Vorkammer gegenüber dem Stand der Technik verbessert ist. Dabei ist vorgesehen, dass die Vorkammer mindestens zwei horizontal übereinanderliegende Ebenen aufweist, und dass die Ebenen gegenläufig zueinander durchströmt werden. Vor allem die durch die gegenläufig zueinander durchströmten Ebenen bedingte Strömungsrichtungsänderung bewirkt, dass selbst stark verschäumte Flüssigkeiten und Ölschaum bei plötzlichen Verwirbelungen, z. B. durch Drehzahländerungen in der Vorkammer so stark verlangsamt werden, dass ein Entgasen möglich ist. Die einzelnen Ebenen sind von der Flüssigkeit bevorzugt von oben nach unten durchströmbar und treten dann in die Messstrecke des Dämpfungsbechers ein.

Durch die Ausbildung von zwei Ebenen innerhalb der Vorkammer wird u. a. die in jeder der Ebenen als ein Kanal ausgebildete, zu durchströmende Strecke verlängert. Weitere Hindernisse, die die Strecke zudem verlängern und den Widerstand gegenüber der einströmenden, verschäumten Flüssigkeit verstärken, sind durch Umlenkelemente, welche an ihren freien Enden rundlich verdickt sein können, gegeben. Durch die Umlenkelemente ist die Strömungsrichtung in den Ebenen der Vorkammer vorgegeben. Mögliche Ausführungsformen sind z. B. Mäander oder Spiralen, wobei ein Mäander durch viele in die Vorkammer hineinragende Umlenkelemente gebildet sein kann und die Spiralstruktur durch ein durchgehendes Leitelement gebildet ist. Andere Ausführungsformen für Vorkammerstrukturen mit einer oder mehreren Ebenen sind Barrieren mit V-förmigen Umlenkelementen oder Dome, welche von der Flüssigkeit umströmt werden müssen. In der Figurenbeschreibung wird eine Auswahl möglicher Vorkammerstrukturen aufgezeigt.

Weiterhin betrifft die Erfindung einen Motor, insbesondere einen Kraftfahrzeugmotor oder ein Kraftfahrzeug, die sich jeweils dadurch auszeichnen, dass sie eine Vorrichtung wie die oben beschriebene aufweisen.

Nachfolgend wird die Erfindung anhand eines in der Zeichnung dargestellten bevorzugten Ausführungsbeispiels weiter erläutert. Im Einzelnen zeigen die Figuren in:
- Fig. 1:: eine erfindungsgemäße Vorrichtung zur Bestimmung eines Füllstandes in geschnittener Darstellung;
- Fig. 2: eine Schnittdarstellung einer erfindungsgemäßen Vorrichtung in der Ebene der Vorkammer in Draufsicht;
- Fig. 3:: eine Schnittdarstellung einer anderen Ausführungsform einer erfindungsgemäßen Vorrichtung in der Ebene der Vorkammer in Draufsicht;
- Fig. 4:: eine Explorationszeichnung einer Vorkammer einer weiteren Ausführungsform, bei der die Vorkammer in zwei Ebenen unterteilt ist, in einer perspektivischen Ansicht;
- Fig. 5:: eine schematische Darstellung der Flussrichtung einer Ausführungsform mit einer in zwei Ebenen unterteilten Vorkammer;
- Fig. 6:: eine schematische Darstellung der Flussrichtung in der oberen Ebene entsprechend Fig. 5 in Draufsicht;
- Fig. 7:: eine schematische Darstellung der Flussrichtung in der unteren Ebene entsprechend Fig. 5 in Draufsicht;
- Fig. 8:: eine Darstellung der Ebenen einer Ausführungsform einer Vorkammer mit zwei Ebenen und in den Ebenen angeordneten Umlenkelementen in Draufsicht;
- Fig. 9:: eine Darstellung der Ebenen einer zweiten Ausführungsform einer Vorkammer mit zwei Ebenen und in den Ebenen angeordneten Umlenkelementen in Draufsicht;
- Fig. 10:: eine Darstellung der Ebenen einer dritten Ausführungsform einer Vorkammer mit zwei Ebenen und in den Ebenen angeordneten Umlenkelementen in Draufsicht;
- Fig. 11:: eine Darstellung der Ebenen einer vierten Ausführungsform einer Vorkammer mit zwei Ebenen und in den Ebenen angeordneten Spiralstrukturen in Draufsicht; und
- Fig. 12:: eine Darstellung der Ebenen einer fünften Ausführungsform einer Vorkammer mit zwei Ebenen und einer Vielzahl in den Ebenen angeordneter Dome in Draufsicht.

Eine erfindungsgemäße Vorrichtung 1 zur Bestimmung des Füllstandes in einem Behälter weist im Bodenbereich einen Ultraschallsensor 3 auf. Dieser Ultraschallsensor 3 ist auf einem Sockelelement 5 der Vorrichtung 1 angeordnet. Mittig über dem Ultraschallsensor 3 ist ein Dämpfungsbecher 2 angeordnet, wobei der Dämpfungsbecher 2 im Inneren eine Messstrecke 4 aufweist. Diese Messstrecke 4 ist bei gefülltem Behälter abhängig von dem Füllstand des Behälters mit Flüssigkeit, insbesondere Öl in einer Ölwanne 5 eines Kraftfahrzeuges, belegt. Der Ultraschallsensor 3 und die Messstrecke 4 sind in einer Linie übereinander angeordnet, wobei der Ultraschallsensor 3 die erzeugten Schallwellen in die Messstrecke 4 des Dämpfungsbechers 2 sendet. Um korrekte Messwerte zu erhalten, sind der Ultraschallsensor 3 und die Messstrecke 4 senkrecht zur Horizontalen angeordnet.

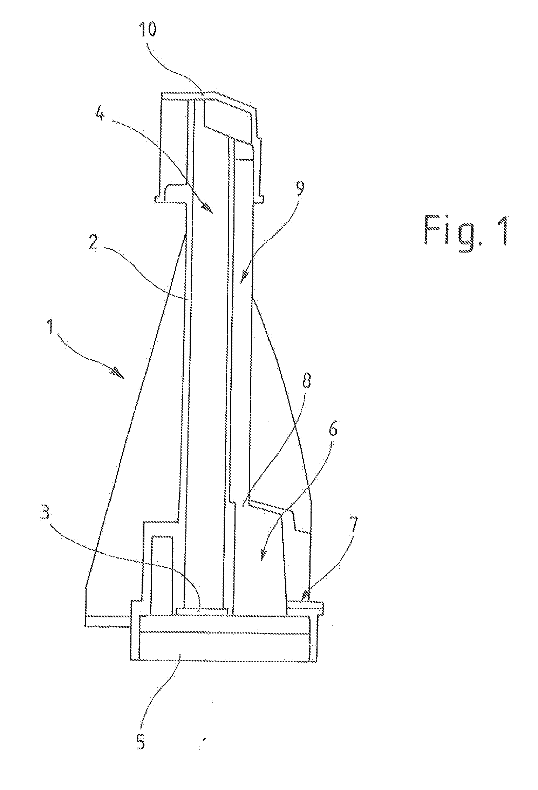

An das Sockelelement 5 angesetzt ist die Vorkammer 6 mit einer Einlassöffnung 7 zum Behälter und mit zwei Auslassöffnungen, wovon nur eine Auslassöffnung 8 in der Fig. 1 dargestellt ist. Die nicht dargestellte Auslassöffnung 16 ist die Öffnung, die zu der Eintrittsöffnung 17 der Messstrecke 4 des Dämpfungsbechers 2 führt. Ebenso wie die Auslassöffnung 16 ist die geometrische Struktur der Vorkammer 6 in der schematischen Darstellung nicht wiedergegeben.

Am höchsten Punkt der Vorkammer 6 ist die Auslassöffnung 8 angeordnet, an die eine Ableitungseinrichtung 9 anschließt, welche parallel zur Messstrecke 4 des Dämpfungsbechers 2 ausgerichtet ist und außen an dem Dämpfungsbecher 2 anliegend angeordnet ist. Im oberen Endbereich der Ableitungseinrichtung 9 und der Messstrecke 4 des Dämpfungsbechers 2 weist die Vorrichtung 1 ein Abschirmelement 10 auf. Dieses Abschirmelement 10 ist als eine Kappe ausgebildet, die die Entlüftungsöffnungen von der Messstrecke 4 und dem Abschirmelement 9 abdeckt, wobei in dem Abschirmelement 10 eine äußere Entlüftungseinrichtung vorgesehen ist, welche ein Entgasen der Messstrecke 4 und der Ableitungseinrichtung 9 ermöglicht. Mit der Ableitungseinrichtung 9 ist das Eindringen von Ölschaum oder anderen verschäumten Flüssigkeiten in die Messstrecke 4 oder die Ableitungseinrichtung 9 über das Abschirmelement 10 erschwert.

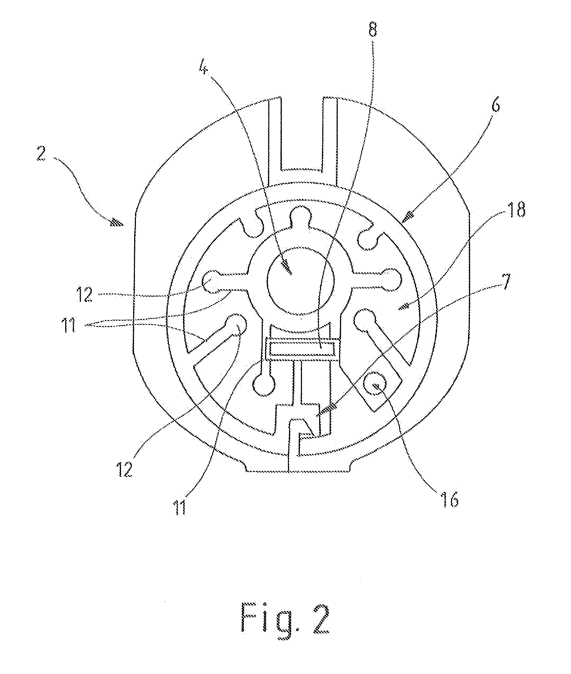

Eine mögliche geometrische Struktur der Vorkammer 6 und die dadurch bedingte Führung der einströmenden Flüssigkeit in der Vorkammer 6, ist in Fig. 2 dargestellt. In der Mitte der Vorkammer 6 ist die Messstrecke 4 angeordnet, welche von der Vorkammer 6 umgeben ist. Durch die Ausgestaltung der Vorkammer 6 ist ein Kanal 18 gebildet, der einmal um die Messstrecke 4 herumgeführt ist. Dieser Kanal 18 verbindet die Einlassöffnung 7 zum Behälter mit der Auslassöffnung 16 zur Eintrittsöffnung 17 der Messstrecke 4 des Dämpfungsbechers 2. Dabei bilden eine Vielzahl von Umlenkelementen 11 in dem Kanal 18 der Vorkammer 6 Hindernisse.

In dem Ausführungsbeispiel führen die eingebauten Umlenkelemente 11 zu Windungen, um die die hineinströmende Flüssigkeit herumgelenkt und verlangsamt wird. Die Umlenkelemente sind alternierend mit den sich gegenüberliegenden Wänden des Kanals 18 verbunden. Damit ist die Strömung der Flüssigkeit in diesem Ausführungsbeispiel mit einem Mäander vergleichbar. Die Anzahl der Windungen entspricht dabei der Anzahl der in der Vorkammer 6 verbauten Umlenkelemente 11. Die freien Enden der Umlenkelemente 11 sind zudem mit rundlichen Verdickungen 12 versehen. Die von der Flüssigkeit zu durchströmende Strecke in der Vorkammer 6 ist aufgrund der Gestaltung des Kanals 18 möglichst lang. Die Auslassöffnung 8 ist in dem Ausführungsbeispiel an dem Ende des Kanals 18 mit der Einlassöffnung 7 angesetzt, ohne dass zwischen Einlassöffnung 7 und Auslassöffnung 8 eines der Umlenkelemente 11 angeordnet ist. Zudem ist die Auslassöffnung 8 rechteckig ausgeführt.

Ist ein Behälter mit einer Vorrichtung 1 ausgestattet und nimmt die zu messende Flüssigkeit auf, insbesondere Öl in einem Motor eines Kraftfahrzeuges, füllen sich Vorkammer 6 und Messstrecke 4 mit der Flüssigkeit. Der in der Messstrecke 4 vorliegende Füllstand entspricht dabei dem Füllstand im Behälter. Bei Betrieb des Kraftfahrzeugmotors mit einer erfindungsgemäßen Vorrichtung 1 wird die Flüssigkeit durch die ständige Umwälzung verschäumt.

Das verschäumte Öl oder die Flüssigkeit gelangt über die Einlassöffnung 7 in die Vorkammer 6 und strömt bei niedrigen Drehzahlen und moderaten Drehzahlsteigerungen über den in der Vorkammer 6 ausgebildeten Kanal 18 zur Auslassöffnung 16 und zur Eintrittsöffnung 17 der Messstrecke 4 des Dämpfungsbechers 2.

Die von den Umlenkelementen 11 gebildete geometrische Struktur des Kanals 18 verringert die Strömungsgeschwindigkeit und Gasblasen können aus der verschäumten Flüssigkeit entweichen, bevor die Vorkammer 6 durchströmt ist. Die so entgaste Flüssigkeit tritt über die Auslassöffnung 16 und die Eintrittsöffnung 17 in die Messstrecke 4 ein. Über eine Entlüftungseinrichtung im oberen Endbereich der Messstrecke 4 kann das in der Messstrecke 4 befindliche Gas bei steigendem Füllstand entweichen und bei fallendem Füllstand wiederum in die Messstrecke 4 eindringen. Das Abschirmelement 10 verhindert, dass statt Gas Ölschaum oder Flüssigkeit in die Messstrecke 4 gelangt.

Bei plötzlichen Füllstandsänderungen, insbesondere bei dynamischer Fahrweise und Drehzahlsprüngen, kann die hereinströmende Flüssigkeit in dem in der Vorkammer 6 ausgebildeten Kanal 18 nicht ausreichend verlangsamt werden. Durch den der einströmenden Flüssigkeit entgegengesetzten, größeren Widerstand und die höhere Trägheit der Flüssigkeit in der Vorkammer 6 ist gewährleistet, dass die einströmende Flüssigkeit nicht in die Messstrecke 4 gelangt. Stattdessen strömt die Flüssigkeit aufgrund der Anordnung der Auslassöffnung 8 nahe der Einlassöffnung 7 sowie der parallelen und in etwa gleich hohen Ausbildung von Ableitungseinrichtung 9 und Messstrecke 4 in die Ableitungseinrichtung 9. Durch mechanische Auslenkung bzw. Schwingung des Dämpfungsbechers 2 kann in bestimmten Drehzahlbereichen zudem ein Sog in der Messstrecke 4 und der Ableitungseinrichtung 9 erzeugt werden, der das Einströmen der Flüssigkeit verstärkt. Mit der erfindungsgemäßen Ableitungseinrichtung 9 ist auch dann ein Eintreten von Gasblasen und -bläschen in die Messstrecke 4 des Ultraschallsensors 2 nicht mehr möglich.

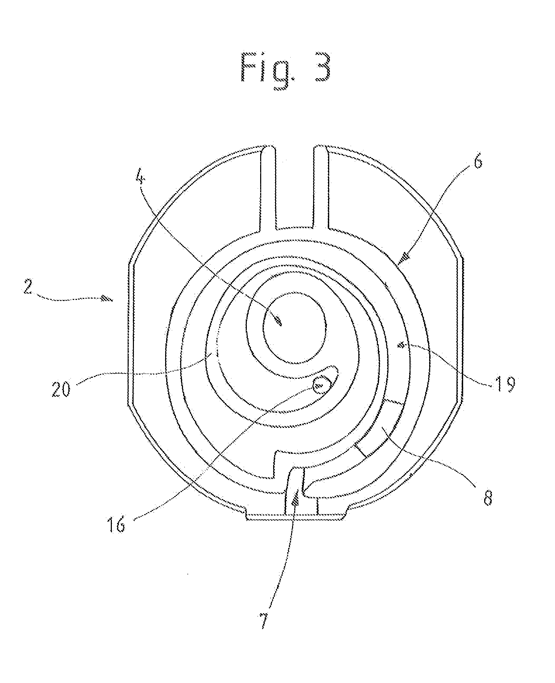

Eine andere Ausführungsform der Vorkammer 6 zeigt die Fig. 3. Anstatt viele Umlenkelemente 11 in dem Kanal 19 anzuordnen und eine Mäanderstruktur mit vielen Windungen zu erzeugen, ist der Kanal 19 in der Vorkammer 6 hier als Spirale ausgebildet und zweimal um die Messstrecke 4 herumgeführt. Die geometrische Struktur der Spirale wird durch ein durchgehendes Leitelement 20 gewährleistet. Die Auslassöffnung 8 mit der anschließenden Ableitungseinrichtung 9 ist im äußeren Umfang des spiralförmigen Kanals 19 in Fließrichtung direkt hinter der Einlassöffnung 7 angeordnet.

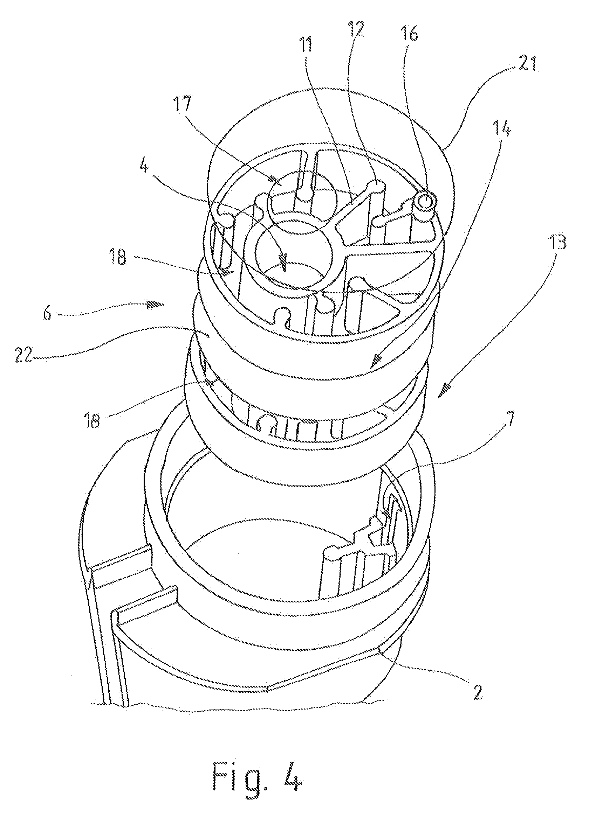

Fig. 4 zeigt eine weitere Ausführungsform der Erfindung mit einer Vorkammer 6, die eine obere und eine untere Ebene 13, 14 aufweist, wobei beide Ebenen 13, 14 gegenläufig zueinander durchströmt werden. Dabei ist die Vorrichtung 1 10 in der Zeichnung mit dem Bodenbereich nach oben dargestellt, so dass die untere Ebene 14 der beiden Ebenen oberhalb der oberen Ebene 13 dargestellt ist. Die geometrische Struktur in den beiden Ebenen 13, 14 ähnelt dabei der geometrischen Struktur der Vorkammer 6 des ersten Ausführungsbeispiels in Fig. 2. Auch die Vorkammer 6 mit zwei Ebenen 13, 14 weist je Ebene einen Kanal 18 mit Umlenkelementen 11 und Mäanderstruktur auf, wobei den Umlenkelementen 11 rundliche Verdickungen 12 an den freien Enden zugeordnet sind. Die Messstrecke 4 des Dämpfungsbechers 2 ist wiederum mittig angeordnet und die in den Vorkammerebenen 13, 14 gebildeten Kanäle 18 werden je einmal um die Messstrecke 4 des Dämpfungsbechers 2 herumgeführt. Zwischen den beiden Ebenen 13, 14 ist ein Trennelement 22 mit einer Verbindungsöffnung 15 vorgesehen. Diese Verbindungsöffnung 15 verbindet die letzte Kammer der oberen Ebene 13 und die erste Kammer der unteren Ebene 14. Aufgrund der gewählten Ansicht ist die Verbindungsöffnung 15 in Fig. 4 jedoch nicht zu sehen. Die Einlassöffnung 7 zum Behälter, über die die zu messende Flüssigkeit einströmen kann, ist in der oberen Ebene 13 angeordnet. In einem Bodenelement 21, dass die untere Ebene 14 der Vorkammer 6 verschließt, ist die Auslassöffnung 16 angeordnet, über welche die eingeströmte Flüssigkeit zur Messstrecke 4 gelangen kann.

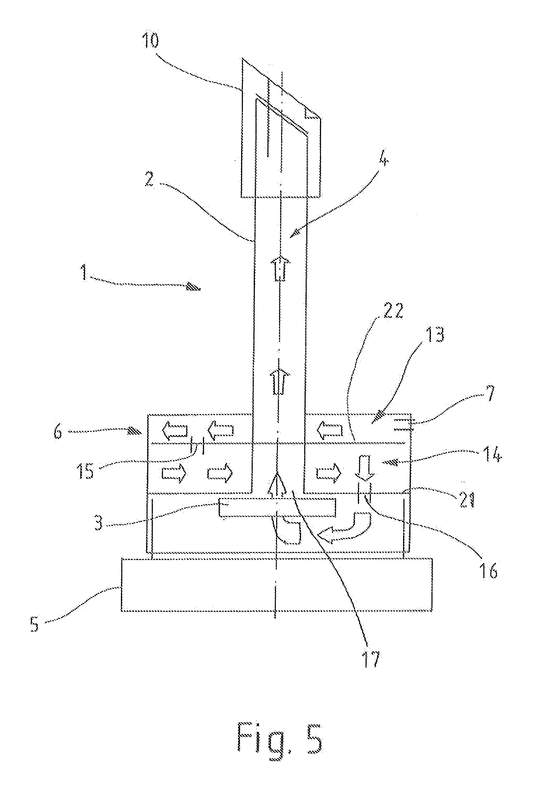

Fig. 5 bis Fig. 7 zeigen die Fließrichtung einer einströmenden Flüssigkeit in den Dämpfungsbecher 2 entsprechend einer Ausführungsform mit zwei Vorkammerebenen 13, 14. Diese strömt zuerst über die obere Ebene 13 zur Verbindungsöffnung 15, über welche die Flüssigkeit in die untere Ebene 14 gelangt. Durch die gegenläufige Strömung in den Ebenen 13 und 14 wird die eintretende Flüssigkeit beim Übergang von der oberen Ebene 13 zur unteren Ebene 14 verwirbelt, wodurch die Auflösung von Gasblasen verbessert ist.

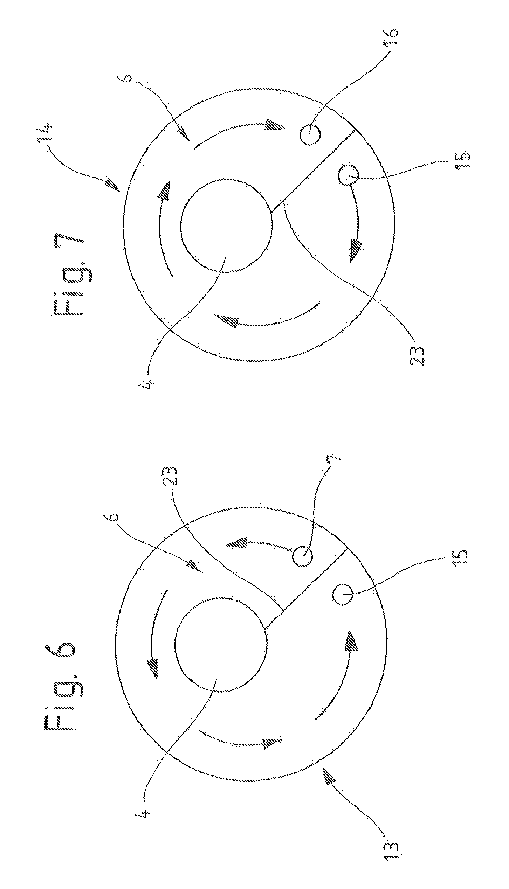

Die Strömung in den einzelnen Ebenen ist in Fig. 6 und Fig. 7 dargestellt, wobei Fig. 6 die obere Ebene und Fig. 7 die untere Ebene zeigt. Die Fließrichtung in den Ebenen ist durch Pfeile aufgezeigt. Nachdem die Flüssigkeit über die Einlassöffnung 7 in die Vorkammer 6 geströmt ist, wird die Flüssigkeit durch die in der oberen Ebene 13 vorgegebene geometrische Struktur einmal entgegen der Uhrzeigerrichtung um die Messstrecke 4 des Dämpfungsbechers 2 herumgeführt. Über die Verbindungsöffnung 15 gelangt die Flüssigkeit dann in die in Fig. 7 dargestellte untere Ebene 14. In der unteren Ebene 14 strömt die Flüssigkeit durch die vorgegebene geometrische Struktur in Uhrzeigerrichtung wiederum einmal um die Messstrecke 4 des Dämpfungsbechers 2 zur Auslassöffnung 16. Entscheidend ist dabei, dass die Fließrichtung in der in Fig. 7 gezeigten unteren Ebene 14 gegenläufig zu der in Fig. 6 gezeigten oberen Ebene 13 ist. Die geometrische Struktur in den Ebenen ist jeweils durch ein Sperrelement 23 vorgegeben. Dieses Sperrelement 23 ist jeweils zwischen den Öffnungen in der jeweiligen Ebene angeordnet und gewährleistet, dass die einströmende Flüssigkeit in jeder Ebene einmal um die Messstrecke 4 herumgeführt ist.

Von der unteren Ebene 14 gelangt die Flüssigkeit dann, wie in Fig. 5 dargestellt, über die Auslassöffnung 16 in dem Bodenelement 21 zur Eintrittsöffnung 17 und in die Messstrecke 4 des Dämpfungsbechers 2, wo die Messung des Füllstandes mit den von dem Ultraschallsensor 3 ausgesendeten Schallwellen erfolgt. In der Zeichnung sind zudem das Abschirmelement 10 im oberen Endbereich des Dämpfungsbechers 2 und das Sockelelement 5 dargestellt. Die erfindungsgemäße Ableitungseinrichtung 9 ist in Fig. 5 bis Fig. 7 nicht dargestellt.

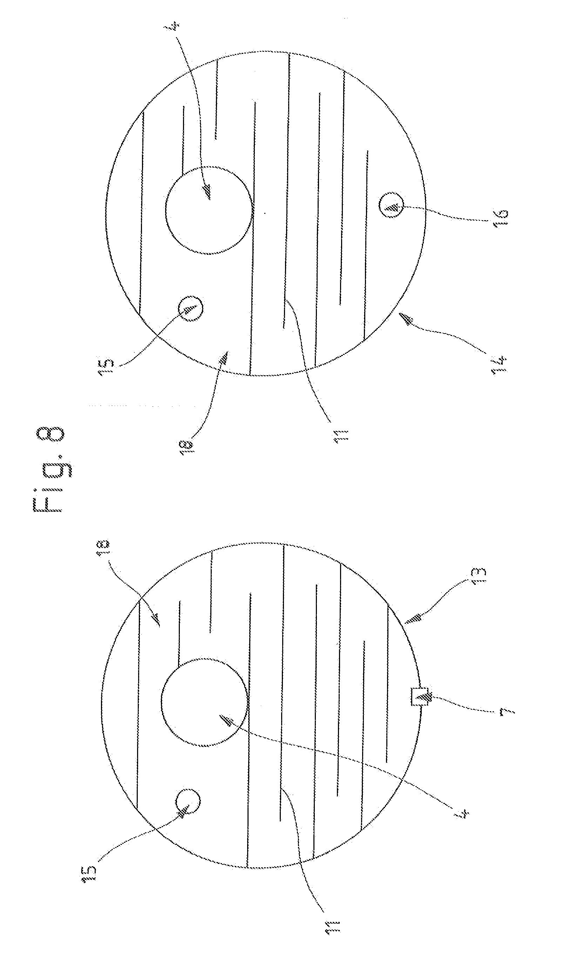

In den Figuren 8 bis 12 sind weitere Ausführungsformen einer Vorkammer 6 mit zwei Ebenen 13, 14 dargestellt. Dabei zeigen die Figuren 8 bis 12 jeweils die obere Ebene 13 und die untere Ebene 14 nebeneinander in Draufsicht. Weiterhin sind die Einlassöffnung 7 in der oberen Ebene 13, die Verbindungsöffnung 15 zwischen der oberen Ebene 13 und der unteren Ebene 14, die Auslassöffnung 16 in der unteren Ebene 14 sowie die Messstrecke 4 in jeder der Figuren 8 bis 12 ersichtlich. Die Unterschiede zwischen den Figuren 8 bis 12 ergeben sich aus der Gestaltung der Strukturen in den Vorkammerebenen.

Fig. 8 zeigt parallel zueinander ausgerichtete Umlenkelemente 11 die von der Vorkammerwand in das Innere der Vorkammer 6 hineinragen und einen Kanal 18 formen, der als Mäander in der jeweiligen Ebene ausgebildet ist, wobei 10 beide Ebenen 13, 14 wie in Fig. 6 und Fig. 7 gegenläufig zu einander durchströmt werden.

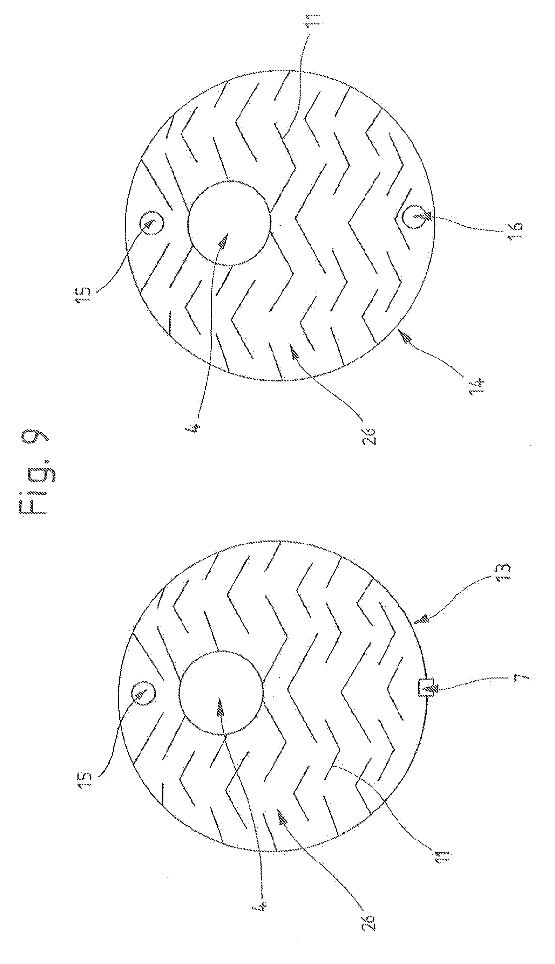

Bei der Vorkammerstruktur in Fig. 9 sind die Umlenkelemente 11 als Barrieren geformt, die die einströmende Flüssigkeit über die gesamte Fläche 26 der oberen Ebene 13 und der unteren Ebene 14 verteilen. Die einzelnen Umlenkelemente 11 sind in dieser Ausführungsform jeweils V-förmig ausgebildet und in den Ebenen 13, 14 derart angeordnet, dass die Öffnungen zwischen den einzelnen, als Barrieren geformten Umlenkelementen 11 versetzt zueinander angeordnet sind.

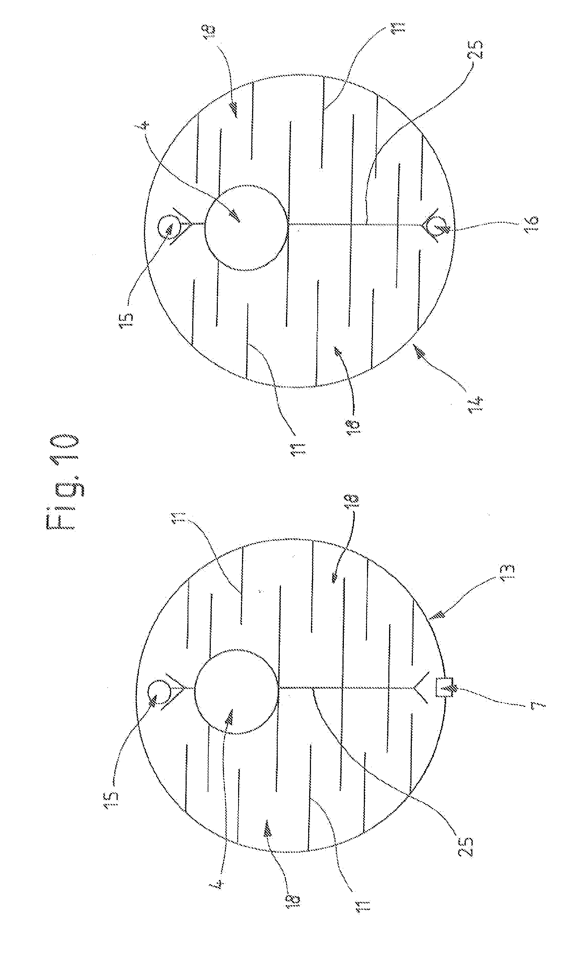

Wiederum parallele Umlenkelemente 11, ähnliche denen in Fig. 8, sind in den Ebenen 13, 14 der Ausführungsform in Fig. 10 angeordnet, wobei hier in jeder der beiden Ebenen 13, 14 zwei getrennte Kanäle 18 gebildet sind, die an den Öffnungen in der jeweiligen Ebenen jeweils aufgeteilt bzw. zusammengeführt werden. Diese Öffnungen sind in der oberen Ebene 13 die Einlassöffnung 7 und die Verbindungsöffnung 15 sowie in der unteren Ebene 14 die Verbindungsöffnung 15 und die Auslassöffnung 16. Um die Kanäle in der jeweiligen Ebene zu trennen, ist zusätzlich zu den Umlenkelementen 11 ein weiteres Element 25 vorgesehen, von dem wiederum Umlenkelemente 11 abgehen. Durch die zusätzlichen Umlenkelemente 11, die vom Element 25 abgehen, ist in den Kanälen 18 jeweils eine Mäanderstruktur geschaffen.

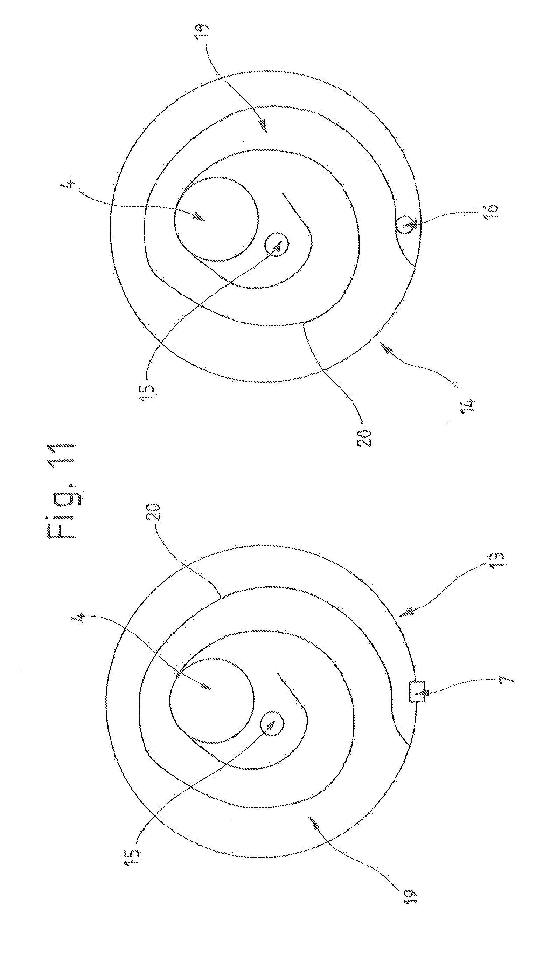

Eine Spiralstruktur wie in Fig. 3 zeigt Fig. 11 für eine Vorkammer 6 mit zwei Ebenen. Einströmende Flüssigkeit wird in diesem Ausführungsbeispiel in der oberen Ebene 13 von außen ins Innere der von einem Leitelement 20 gebildeten Spiralstruktur geführt und in der unteren Ebene 14 durch die Spiralstruktur entgegengesetzt zur oberen Ebene geführt.

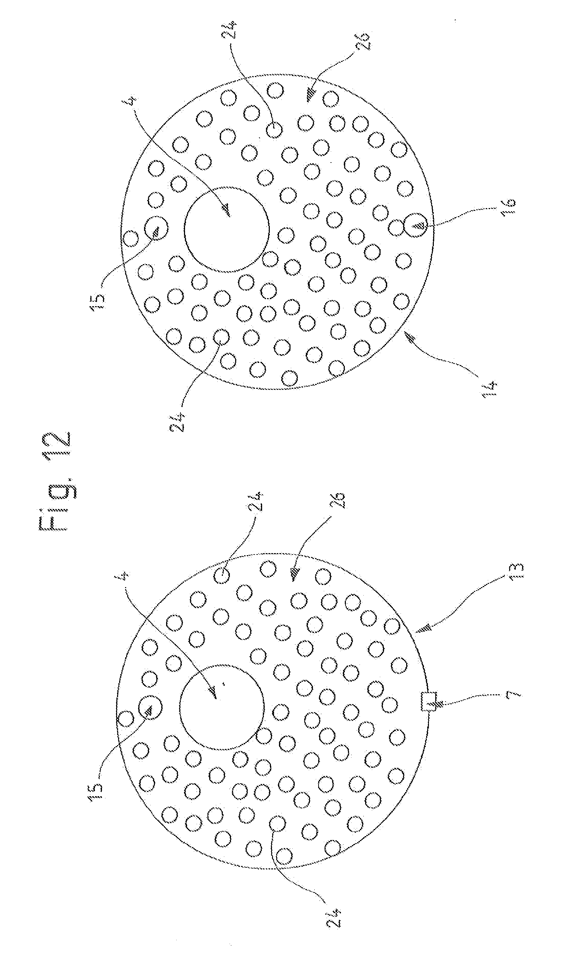

Kein Leitelement 20 oder Umlenkelement 11 ist in der Ausführungsform in Fig. 12 vorgesehen. Die Verlangsamung und die Verteilung einströmender Flüssigkeit über die freie Fläche 26 wird durch eine Vielzahl in den Ebenen 13, 14 angeordneter Dome 24 beeinflusst, um die die einströmende Flüssigkeit herumfließen muss.

## Patentansprüche

1. Vorrichtung zur Bestimmung eines Füllstandes in einem Behälter, mit einem Dämpfungsbecher (2), der eine Eintrittsöffnung (7) und eine Entlüftungsöffnung aufweist, mit einem im Dämpfungsbecher (2) angeordneten Ultraschallwandler (3) und einer zugehörigen Messstrecke (4) sowie mindestens einer Vorkammer (6), wobei die Vorkammer (6) eine Einlassöffnung (7) zum Behälter und eine Auslassöffnung (16) zur Eintrittsöffnung des Dämpfungsbechers aufweist,
**dadurch gekennzeichnet,**
**dass** die Vorkammer (6) der Vorrichtung (1) eine zweite Auslassöffnung (8) aufweist, die in einer Ableitungseinrichtung (9) mündet,
**dass** die Ableitungseinrichtung in Form eines nach oben ausgerichteten Bypasses parallel zu der Messtrecke (4) des Ultraschallwandlers ausgebildet ist, und
**dass** der Bypass (9) im oberen Endbereich der Messstrecke (4) des Dämpfungsbechers (2) endet.

2. Vorrichtung nach Anspruch 1, **dadurch gekennzeichnet, dass** die zweite Auslassöffnung (8) der Vorkammer (6) in Strömungsrichtung direkt hinter der Einlassöffnung (7) der Vorkammer (6) zum Behälter und vor in der Vorkammer (6) ausgebildeten Windungen angeordnet ist.

3. Vorrichtung nach einem der Ansprüche 1 und 2, **dadurch gekennzeichnet, dass** die Auslassöffnung (8) mit der Ableitungseinrichtung (9) im oberen Bereich der Vorkammer (6) angeordnet ist.

4. Vorrichtung nach einem der vorhergehenden Ansprüche, **dadurch gekennzeichnet, dass** die Ableitungseinrichtung (9) parallel zu einer Messstrecke (4) des Ultraschallwandlers (3) im Dämpfungsbecher (2) angeordnet ist.

5. Vorrichtung nach Anspruch 1 bis 4, **dadurch gekennzeichnet, dass** die Ableitungseinrichtung (9) außen an dem Dämpfungsbecher (2) anliegend geführt ist.

6. Vorrichtung nach einem der vorhergehenden Ansprüche, **dadurch gekennzeichnet, dass** der Ableitungseinrichtung (9) im oberen Endbereich ein Abschirmelement (10) zugeordnet ist.

7. Vorrichtung nach einem der vorhergehenden Ansprüche, **dadurch gekennzeichnet, dass** das Abschirmelement (10) die Ableitungseinrichtung (9) und die Messstrecke (4) des Dämpfungsbechers (2) überspannt.

8. Vorrichtung nach einem der vorhergehenden Ansprüche, **dadurch gekennzeichnet, dass** die Vorkammer (6) mindestens zwei horizontal übereinander liegende Ebenen (13, 14) aufweist und dass die Ebenen (13, 14) gegenläufig zueinander durchströmt werden.

9. Motor, insbesondere Kraftfahrzeugmotor, **dadurch gekennzeichnet, dass** der Motor eine Vorrichtung (1) nach einem der Ansprüche 1 bis 8 aufweist.

10. Kraftfahrzeug, **dadurch gekennzeichnet, dass** das Kraftfahrzeug eine Vorrichtung (1) nach einem der Ansprüche 1 bis 8 aufweist.

## Claims

1. A device for determining a fill level in a container, with a stillwell (2), which has an inlet port (7) and a ventilation port, with an ultrasonic transducer (3) arranged in the stillwell (2), and a related measuring section (4), and with at least one antechamber (6), wherein the antechamber (6) has an inlet port (7) leading to the container and an outlet port (16) leading to the inlet port of the stillwell,
**characterised in that**
the antechamber (6) of the device (1) has a second outlet port (8), which opens out into a discharge facility (9),
the discharge facility is designed in the form of a bypass, aligned upwards parallel to the measuring section (4) of the ultrasonic transducer, and
the bypass (9) terminates in the upper end region of the measuring section (4) of the stillwell (2).

2. The device according to claim 1, **characterised in that**, the second outlet port (8) of the antechamber (6) is arranged, as seen in the flow direction, directly behind the inlet port (7) of the antechamber (6) to the container, and ahead of the coils formed in the antechamber (6).

3. The device according to any one of the claims 1 and 2, **characterised in that**, the outlet port (8), together with the discharge facility (9), is arranged in the upper region of the antechamber (6).

4. The device according to any one of the preceding claims, **characterised in that**, the discharge facility (9) is arranged parallel to a measuring section (4) of the ultrasonic transducer (3) in the stillwell (2).

5. The device according to any one of claims 1 to 4, **characterised in that**, the discharge facility (9) is led externally adjacent to the stillwell (2).

6. The device according to any one of the preceding claims, **characterised in that**, a shielding element (10) is assigned to the discharge facility (9) in the upper end region.

7. The device according to any one of the preceding claims, **characterised in that**, the shielding element (10) spans across the discharge facility (9) and the measuring section (4) of the stillwell (2).

8. The device according to any one of the preceding claims, **characterised in that**, the antechamber (6) has at least two horizontal planes (13, 14) lying one above another, and **in that** the flows pass through the planes (13, 14) in opposite directions.

9. An engine, in particular a motor vehicle engine, **characterised in that**, the engine has a device (1) according to any one of the claims 1 to 8.

10. A motor vehicle, **characterised in that**, the motor vehicle has a device (1) according to any one of the claims 1 to 8.

## Revendications

1. Dispositif de détermination d'un niveau de remplissage dans un conteneur avec un boîtier d'amortissement (2) qui comporte une ouverture d'entrée (7) et une ouverture d'aération avec un transducteur d'ultrasons (3) logé dans le boîtier d'amortissement (2) et une section de mesure (4) correspondante ainsi qu'au moins une préchambre (6), ladite préchambre (6) comportant une ouverture d'entrée (7) pour le conteneur et une ouverture d'évacuation (16) pour l'ouverture d'entrée du boîtier d'amortissement
**caractérisé en ce**
**que** la préchambre (6) comporte le dispositif (1) d'une deuxième ouverture d'évacuation (8), qui débouche dans un système de dérivation (9),
**que** le système de dérivation est constitué sous la forme d'une dérivation orientée vers le haut parallèlement à la section de mesure (4) du transducteur d'ultrasons, et
**que** la dérivation (9) se termine dans la zone d'extrémité supérieure de la section de mesure (4) du boîtier d'amortissement (2).

2. Dispositif selon la revendication 1 **caractérisé en ce que** la deuxième ouverture d'évacuation (8) de la préchambre (6) est disposée dans la direction d'écoulement directement derrière l'ouverture d'entrée (7) de la préchambre (6) vers le conteneur et les spires formées devant dans la préchambre (6).

3. Dispositif selon une quelconque des revendications 1 ou 2 **caractérisé en ce que** l'ouverture d'évacuation (8) avec le système de dérivation (9) est disposée dans la zone supérieure de la préchambre (6).

4. Dispositif selon une quelconque des revendications précédentes **caractérisé en ce que** le système de dérivation (9) est disposé parallèlement à une section de mesure (4) du transducteur d'ultrasons (3) dans le boîtier d'amortissement (2).

5. Dispositif selon la revendication 1 à 4 **caractérisé en ce que** le système de dérivation (9) est guidé à l'extérieur adjacent au boîtier d'amortissement (2).

6. Dispositif selon une quelconque des revendications précédentes **caractérisé en ce qu'**un élément de protection (10) est attribué au système de dérivation (9) dans la zone d'extrémité supérieure.

7. Dispositif selon une quelconque des revendications précédentes **caractérisé en ce que** l'élément de protection (10) recouvre le système de dérivation (9) et la section de mesure (4) du boîtier d'amortissement (2).

8. Dispositif selon une quelconque des revendications précédentes **caractérisé en ce que** la préchambre (6) comporte au moins deux niveaux (13, 14) superposés horizontalement et **en ce que** les niveaux (13, 14) sont traversés dans le sens opposé l'un par rapport à l'autre.

9. Moteur, en particulier moteur de véhicule automobile, **caractérisé en ce que** le moteur comporte un dispositif (1) selon une quelconque des revendications 1 à 8.

10. Véhicule automobile **caractérisé en ce que** le véhicule automobile comporte un dispositif (1) selon une quelconque des revendications 1 à 8.
